(19) Europäisches Patentamt / European Patent Office / Office européen des brevets

(11) **EP 3 187 702 B1**

(12) **EUROPEAN PATENT SPECIFICATION**

(45) Date of publication and mention
of the grant of the patent:
**09.09.2020 Bulletin 2020/37**

(51) Int Cl.:
**F01K 23/10** *(2006.01)*

(21) Application number: **16207193.0**

(22) Date of filing: **28.12.2016**

(54) **METHOD AND DEVICE FOR CONTROLLING THE THERMAL EXCHANGE IN A HEAT RECOVERY STEAM GENERATOR OF A COMBINED CYCLE POWER PLANT AND COMBINED CYCLE POWER PLANT**

VERFAHREN UND VORRICHTUNG ZUM STEUERN DES WÄRMETAUSCHS IN EINEM WÄRMERÜCKGEWINNUNGSDAMPFGENERATOR EINES KOMBIKRAFTWERKS UND KOMBIKRAFTWERK

PROCÉDÉ ET DISPOSITIF DE COMMANDE DE L'ÉCHANGE THERMIQUE DANS UN GÉNÉRATEUR DE VAPEUR À RÉCUPÉRATION DE CHALEUR D'UNE CENTRALE ÉLECTRIQUE À CYCLE COMBINÉ ET CENTRALE ÉLECTRIQUE À CYCLE COMBINÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2015 IT UB20159367**

(43) Date of publication of application:
**05.07.2017 Bulletin 2017/27**

(73) Proprietor: **ANSALDO ENERGIA S.p.A.**
**16152 Genova (IT)**

(72) Inventors:
• **PICCARDO, Fabio**
 **16149 GENOVA (IT)**
• **ROVERE, Nicola Angelo**
 **16137 GENOVA (IT)**

(74) Representative: **Andreotti, Erika et al**
**Studio Torta S.p.A.**
**Via Viotti, 9**
**10121 Torino (IT)**

(56) References cited:
**EP-A1- 2 098 691      EP-A1- 2 372 127**
**US-A1- 2015 020 499**

**Description**

The present invention relates to a method for controlling the thermal exchange in a heat recovery steam generator of a combined cycle power plant and a combined cycle plant with or without cogeneration.

A combined cycle power plant for the production of energy generally comprises a gas turbine unit, and a steam generator with exhaust gases coming from the gas turbine unit and configured to generate steam to be supplied to a functional unit, for example a steam turbine unit.

The steam generator comprises an exhaust fumes flow chamber, through which the exhaust fumes of the gas turbine unit flow, and a steam circuit supplied with demineralised water.

The steam circuit extends inside the exhaust fumes flow chamber, in such a way as to use the heat of the hot fumes coming from the gas turbine unit to generate steam.

An example of a plant of this kind is disclosed in document US 2015/0020499. Further examples are disclosed in documents EP2 098 691 A1 and EP2 372 127 A1.

A catalyst is also often installed along the exhaust fumes flow chamber, configured to reduce the carbon monoxide content in the fumes generated by the gas turbine unit.

The steam generator is usually configured to obtain the maximum thermal efficiency in nominal operating conditions of the gas turbine.

However, the market compels manufacturers to design systems that provide for a gas turbine that can also function at reduced load, for example during night hours when energy demand is significantly reduced. This causes a decrease of the flow rate and the temperature of the gas turbine exhaust fumes. The same conditions may also occur during start-up of the gas turbine.

The low flow rate and low temperature of the gas turbine exhaust fumes may not be sufficient to ensure that the steam generator generates the quantity of steam, at the quality (in terms of pressure and temperature) required by the steam turbine and/or by the cogeneration processes of the combined cycle.

In these cases there is the risk of an excessive cooling of the steam turbine with consequent thermal stresses and risks of damage thereto and/or an insufficient flow rate of steam supplied to the cogeneration processes.

In addition, in low load operating conditions, and in particular close to the so-called technical minimum of the gas turbine, exhaust fumes may not be able to sufficiently heat the catalytic converter configured to convert the carbon monoxide produced by combustion into carbon dioxide.

Indeed, at low loads, the instability of the flame and the lower temperatures in the combustion chamber lead to failure to reach the amount of energy necessary for the complete oxidation of the carbon contained in the fossil fuels causing an increase in the production of carbon monoxide.

Catalytic converters have an optimum conversion efficiency at temperatures of approximately 300°C or higher. The efficiency worsens as the temperature falls below 300° and drastically collapses with temperatures below a threshold value typical for the catalyst used.

A purpose of the present invention is therefore to provide a method for controlling the thermal exchange in a heat recovery steam generator of a combined cycle power plant that is free from the drawbacks of the prior art herein described; in particular, a purpose of the invention is to provide a control method that is able to optimize the thermal exchange between the exhaust fumes of the gas turbine unit and the steam circuit of the steam generator in such a way as to guarantee an adequate generation of steam to the quality required by the steam turbine and/or by the cogeneration processes and/or by the catalyst even when the gas turbine unit is operated at low loads.

In accordance with these purposes, the present invention relates to a method of controlling the thermal exchange in a heat recovery steam generator of a combined cycle power plant in accordance with claim 1.

A further purpose of the invention is to provide a combined cycle power plant for the production of electric energy in which the quantity of steam generated by the steam generator is sufficient and has the thermal characteristics required by the steam turbine and/or by the cogeneration processes and/or by the catalyst even when the gas turbine unit is operated at low loads.

In accordance with these purposes, the present invention relates to a combined cycle power plant for the production of electrical energy according to claim 5.

Further characteristics and advantages of the present invention will become apparent from the following description of a non-limiting example of an embodiment with reference to the figures of the accompanying drawings, wherein:

- figure 1 is a schematic and simplified diagram of the combined cycle plant for the production of electrical energy according to the present invention;
- figure 2 is a schematic diagram with parts in section and parts removed for clarity, of a detail of the plant of figure 1;
- figure 3 is a schematic block diagram of the device for controlling the thermal exchange in a heat recovery steam generator of a combined cycle power plant according to the present invention;

- figure 4 is a schematic block diagram of a detail of the control device of figure 3 according to a first embodiment;
- figure 5 is a schematic block diagram of the control device of figure 3 according to a second embodiment.

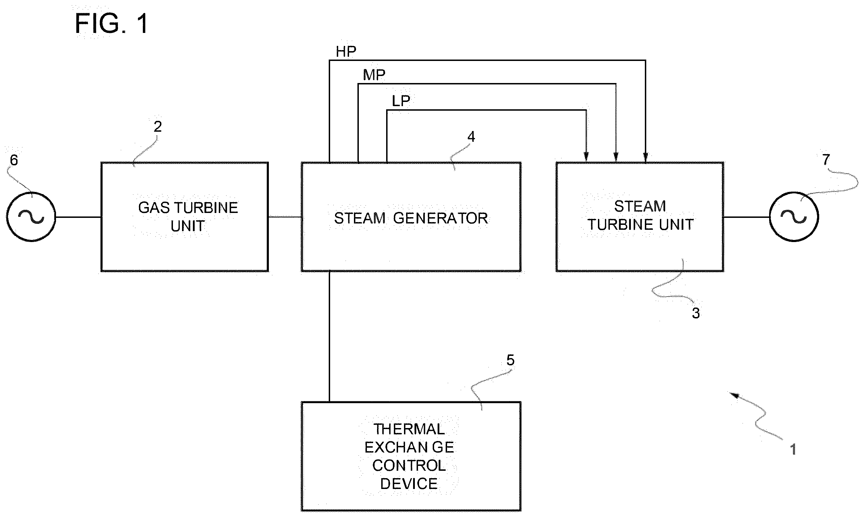

In figure 1, a combined cycle power plant for the production of energy is indicated with the reference number 1.

The plant 1 illustrated in figure 1 is preferably configured to produce only electrical energy.

A variant not illustrated envisages that the plant 1 is configured for the production of electric energy and/or thermal energy, useful for cogeneration processes such as district heating systems for civil use (homes and offices) and industrial use (heating greenhouses for plant growing), and transmission of thermal energy for heating distillation towers for the refining of petroleum products in refineries.

The plant 1 comprises a gas turbine unit 2, a functional unit 3, a steam generator 4 and a control device 5 configured to control the thermal exchange in the steam generator 4.

The gas turbine unit 2 is the prime mover of the combined cycle plant 1 and can be fed with any fuel.

The gas turbine unit 2 is connected to a generator 6 and comprises a compressor, a combustion chamber and a gas turbine (not shown in the attached figures). The gas turbine drives the generator 6 to generate available electric energy.

The functional unit 3 is configured to use the steam generated by the steam generator 4. For example, the functional unit may be a chemical plant or any plant capable of using the steam produced by the steam generator 4.

In the non-limiting example described and illustrated herein, the functional unit 3 is a steam turbine unit.

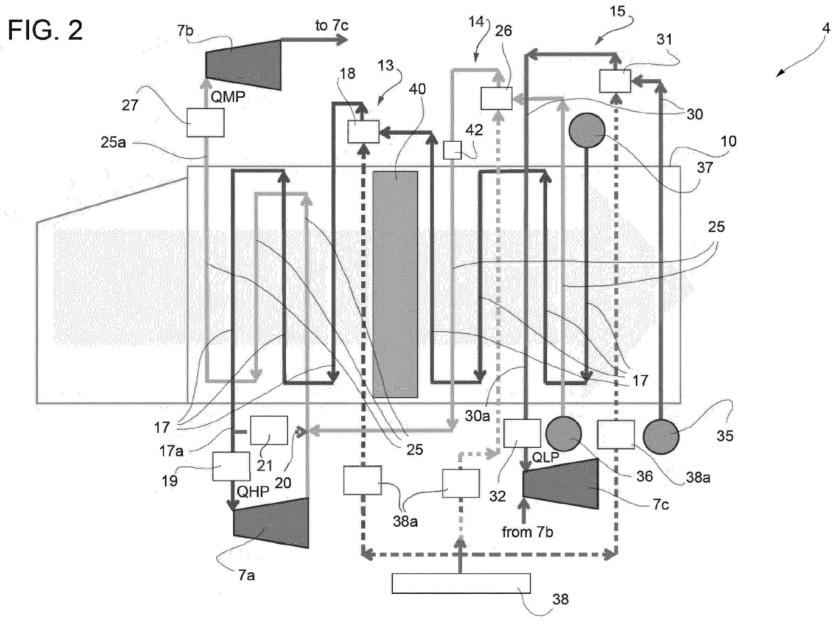

The steam turbine unit is coupled to a respective generator 7 and comprises a high pressure steam turbine 7a, an intermediate pressure steam turbine 7b, and a low pressure steam turbine 7c (shown schematically in figure 2).

The steam generator 4 recovers the residual heat from the combustion fumes generated by the gas turbine unit 2 and produces steam to be supplied to the functional unit 3.

With reference to figure 2, the steam generator 4 comprises an exhaust fumes flow chamber 10, through which the exhaust fumes of the gas turbine unit 2 flow, and a steam circuit 11 supplied with demineralised water.

The steam circuit 11 extends inside the exhaust fumes flow chamber 10, in such a way as to use the heat from the hot fumes coming from the gas turbine unit 2 to generate steam to be supplied to the steam turbine unit 3.

In particular, in the example illustrated, the steam circuit 11 comprises a high pressure section 13, an intermediate pressure section 14, and a low pressure section 15.

The high pressure section 13 comprises a plurality of high pressure thermal exchange conduits 17 arranged in series along a coiled path, a high pressure cylindrical body 18 arranged between two of the high pressure thermal exchange conduits 17 and a high pressure regulating valve 19 arranged along an end high pressure conduit 17a of the plurality of high pressure thermal exchange conduits 17. The end high pressure thermal conduit 17a is connected to the inlet of the high pressure turbine 7a.

The high pressure regulating valve 19 is configured to adjust the flow rate QHP of the high pressure steam supplied to the inlet of the high pressure turbine 7a.

Upstream from the regulating valve 19, the end high pressure conduit 17a comprises a deviation 20 connected to the exhaust of the high pressure turbine 7a by means of a respective bypass valve 21. The deviation 20 is useful in situations when the steam cannot enter the high pressure steam turbine 7a (for example because the turbine 7a is out of service - stopped - or because the steam has not yet reached the minimum pressure and temperature characteristics to be supplied to the turbine 7a without the risk that it condenses there, causing damage to the blades of the high pressure turbine 7a.

The intermediate pressure section 14 comprises a plurality of intermediate pressure thermal exchange conduits 25 arranged in series along a coiled path, an intermediate pressure cylindrical body 26 arranged between two of the intermediate pressure thermal exchange conduits 25 and an intermediate pressure regulating valve 27 arranged along an end intermediate pressure conduit 25a of the plurality of intermediate pressure thermal exchange conduits 25. The end intermediate pressure thermal conduit 25a is connected to the inlet of the intermediate pressure turbine 7b.

The intermediate pressure regulating valve 27 is configured to adjust the flow rate QMP of the intermediate pressure steam supplied to the inlet of the intermediate pressure turbine 7b.

The low pressure section 15 comprises a plurality of low pressure thermal exchange conduits 30 arranged in series along a coiled path, a low pressure cylindrical body 31 arranged between two of the low pressure thermal exchange conduits 30 and a low pressure regulating valve 32 arranged along an end low pressure conduit 30a of the plurality of low pressure thermal exchange conduits 30. The end low pressure thermal conduit 30a is connected to the inlet of the low pressure turbine 7c.

The low pressure regulating valve 32 is configured to adjust the flow rate QLP of the low pressure steam supplied to the inlet of the low pressure turbine 7c.

The high pressure cylindrical body 18, the intermediate pressure cylindrical body 26 and the low pressure cylindrical body 31 are useful during transients (for example start-up, shut-down, and changing the plant load) during which the physical characteristics of the steam generated in the steam generator conduits change due to the change in the process variables (flow rate and temperature of the exhaust fumes of the gas turbine unit 2, temperature and flow rate of the steam in the steam circuit 11). In particular, the high pressure cylindrical body 18, the intermediate pressure cylindrical body 26, and the low pressure cylindrical body 31 accumulate or provide water depending on the operating conditions of the plant 1 in such a way that the steam has a substantially constant pressure in each of the various sections 13, 14 and 15 of the steam circuit 11.

The low pressure cylindrical body 31 is fed by a pump 35 that draws water from a condenser (not illustrated in the accompanying figures).

The intermediate pressure cylindrical body 26 is fed by a pump 36 that draws water in the liquid state from the intermediate pressure section 14, and in particular from the intermediate pressure thermal exchange conduits.

The high pressure cylindrical body 18 is fed by a pump 37 that draws water in the liquid state from the intermediate pressure cylindrical body 26.

The low pressure cylindrical body 31, the intermediate pressure cylindrical body 26, and the high pressure cylindrical body 18 can be selectively fed and brought to working pressure with steam coming from an auxiliary steam source 38 (shown by dashed lines in figure 2). The auxiliary steam source 38 is obviously connected to the low pressure cylindrical body 31, the intermediate pressure cylindrical body 26 and the high pressure cylindrical body 18 by means of regulating members 38a schematically represented in figure 2.

A catalyst 40, which is configured to convert carbon monoxide produced by combustion in the gas turbine unit 2 into carbon dioxide, is arranged along the exhaust fumes flow chamber 10.

The catalyst 40 is preferably arranged in the vicinity of some of the high pressure thermal exchange conduits 17 and some of the intermediate pressure thermal exchange conduits 25.

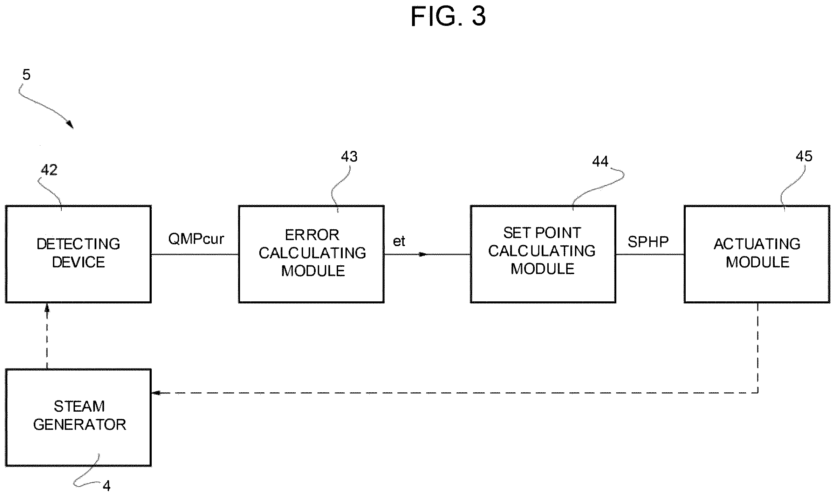

A block diagram relating to the control device 5 is shown in figure 3.

The control device 5 is configured to regulate the thermal exchange of the steam generator 4 so as to optimise the thermal exchange between the exhaust fumes of the gas turbine unit 2 and the steam circuit 11 of the steam generator 4 in such a way as to guarantee an adequate generation of steam to the quality required by the functional unit 3 and/or by the cogeneration processes and/or by the catalyst 40 even when the gas turbine unit 2 is operated at low loads.

The control device 5 comprises:

- at least one detecting device 42 configured to detect at least one working parameter of the current thermodynamic conditions in at least one first element of the steam generator;
- at least one error calculating module 43 configured to calculate a thermal exchange error et as the difference between the detected working parameter and a respective predefined and previously established reference value;
- at least one set point calculating module 44 configured to calculate a pressure set point value for a regulating member of the steam generator 4;
- and at least one actuating module 45 configured to regulate the opening of the regulating member of the steam generator 4.

In the non-limiting example described and illustrated herein the detecting device 42 (also shown in figure 2) is configured to detect the current steam flow rate QMPcur in one of the intermediate pressure thermal exchange conduits 25.

The detecting device 42 preferably comprises one or more calibrated diaphragms coupled to pressure differential gauges.

The detecting device 42 is preferably arranged downstream of the intermediate pressure cylindrical body 26 taking into account the direction of the steam flow from the pump 36 to the intermediate pressure turbine 7b.

If the plant 1 is of the type with cogeneration, the sensing device 42 is still arranged downstream of the intermediate pressure cylindrical body 26 near the point of withdrawal of the intermediate pressure steam intended for cogeneration processes.

A variant not illustrated envisages that the detecting device 42 is preferably arranged downstream of the low pressure cylindrical body 31 taking into account the direction of the steam flow from the pump 35 to the low pressure turbine 7c. If the plant 1 is of the type with cogeneration, the detecting device 42 is still arranged downstream of the low pressure cylindrical body 31 near the point of withdrawal of the low pressure steam intended for cogeneration processes.

The error calculating module 43 is configured to calculate a thermal exchange error et as the difference between the detected operating parameter and a respective predefined reference value, i.e. between the current steam flow rate QMPcur in one of the intermediate pressure thermal exchange conduits 25 and a respective flow rate reference value Qref.

In the non-limiting example described and illustrated herein the flow rate reference value Qref to obtain an optimum thermal exchange is approximately 19.46 kg/s.

It is understood that the reference value of the operating parameter may be modified based on the context of the thermal exchange requirements.

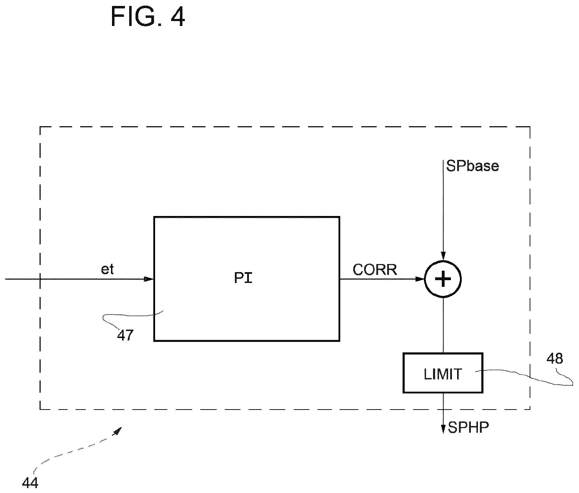

With reference to figure 4, the set point calculating module 44 is configured to add a correction term CORR, calculated by a calculating module 47 based on the value of the thermal exchange error et, to a basis set point value SPbase.

$$SP\ regulating\ member = SPbase + CORR$$

The set point calculating module 44 also comprises a limiter 48 configured to limit the set point pressure value so as to avoid exceeding a predefined maximum value. The maximum value is established in such a way as not to exceed the design limits of the plant 1 and also not to lead to an excessive closing of the regulating member.

In the non-limiting example described and illustrated herein the set point calculating module 44 is configured to calculate the set point pressure SPHP for the high pressure regulating valve 19.

In this case the basis set point value is equal to approximately 8 MPa, while the correction term CORR is calculated by a calculating module 47 of the proportional integral PI type configured to output a correction term in the range of 0 to 25.

The gain parameters of the proportional integral PI calculating module 44 are preferably defined in such a way that the pressure increase is able to ensure a sufficient margin of superheating of the steam which is then supplied to the high pressure turbine 7a.

In the non-limiting example described and illustrated herein the maximum value defined by the limiter is equal to 105 bar. This prevents the design limits of the plant 1 from being exceeded and avoids excessive closing of the high pressure regulating valve 19 and ventilation problems in the high pressure turbine 7a.

The actuating module 45 is configured to regulate opening of the regulating member of the steam generator 4 based on the set point pressure calculated by the set point calculating module 44.

In the non-limiting example described and illustrated herein the actuating module 45 is configured to regulate the actuator of the high pressure regulator valve 19 based on the set point pressure SPHP calculated by the set point calculating module 44.

A variant not illustrated envisages that the set point calculating module 44 is configured to calculate the set point pressure SPMP for the intermediate pressure regulating valve 27 and thus that the actuating module 45 is configured to regulate the actuator of the intermediate pressure regulating valve 27 based on the set point pressure SPMP calculated by the set point calculating module 44.

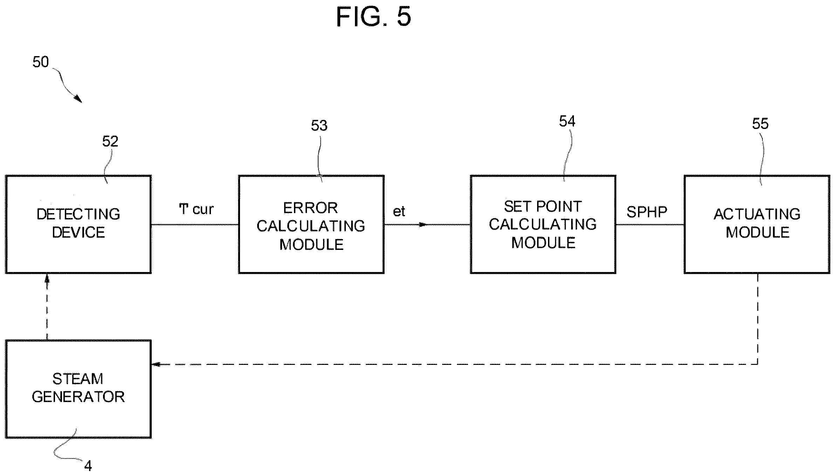

Figure 5 shows a control device 50 according to a second embodiment of the present invention.

The control device 50 differs from the control device 5 essentially by the fact that it comprises a detecting device 52 (not shown in figure 2) configured to detect the current temperature of the steam generator 4 at a point near the catalyst 40.

The detecting device 52 preferably comprises one or more thermocouples.

The detecting device 52 is preferably arranged upstream of the high pressure cylindrical body 18 taking into account the direction of the steam flow from the pump 37 to the high pressure turbine 7a. In particular, the detecting device 52 is arranged upstream of the high pressure cylindrical body 18 along one conduit of the plurality of high pressure thermal exchange conduits 17 usually defined as an evaporator.

The control device 50 accordingly comprises an error calculating module 53 configured to calculate a thermal exchange error et as the difference between the current temperature Tcur of the steam generator 4 at a point near the catalyst 40, and a respective reference temperature value Tref.

In the non-limiting example described and illustrated herein the value of the reference temperature Tref is equal to about 320 °C, a value which corresponds to an optimal operation of the catalyst 40.

The control device 50 also comprises a set point calculating module 54 configured to add a correction term CORR, calculated on the basis of the value of the error of the thermal exchange et calculated by the error calculating module 53, to a basis set point value SPbase, and an actuating module 55 configured to regulate opening of the regulating member of the steam generator 4 based on the set point pressure calculated by the set point calculating module 44.

In the non-limiting example described and illustrated herein the set point calculating module 54 is configured to calculate the set point pressure SPHP for the high pressure regulating valve 19 and is substantially identical to the set point calculating module 44 described for the control device 40 and shown in figure 4 and will therefore not be further described.

The actuating module 55 is also substantially identical to the actuating module 45 and therefore will not be further described.

In this case a variant not illustrated also envisages that the set point calculating module 54 is configured to calculate the set point pressure SPMP for the intermediate pressure regulating valve 27 and thus that the actuating module 55 is configured to regulate opening of the intermediate pressure regulating valve 27 based on the set point pressure SPMP calculated by the set point calculating module 54.

Further variants of the control device according to the present invention not shown provide that the detecting device is configured to detect one or more parameters such as:

- the current steam temperature in one of the high pressure thermal exchange conduits (17);
- the current steam temperature in one of the intermediate pressure thermal exchange conduits (25);
- the current temperature of a catalyst (40) arranged along the exhaust fumes flow chamber (10) of the steam generator (4);
- the current steam flow rate in one of the high pressure thermal exchange conduits (17);
- the current steam pressure in one of the high pressure thermal exchange conduits (17);
- the current steam pressure in one of the intermediate pressure thermal exchange conduits (25).

In use, the control device 5 or 50 according to the present invention controls one or more variable load regulating members.

The invention beneficially makes it possible to reduce the CO emissions of the plant 1, operating conditions being equal, while maintaining almost unchanged the efficiency (understood as the ratio between the fuel used and the electrical power produced) of the plant 1 or makes it possible to reduce the minimum technical power value of the plant 1, at equal CO emissions at the exhaust of the steam generator 4.

The potential to reduce the minimum technical load of the plant 1 increases the flexibility of the plant 1 according to the present invention. Furthermore, thanks to the present invention, the fuel consumption required to supply energy to the power grid at the minimum technical load is reduced by approximately 20%.

Furthermore, the increase of the difference between the maximum and the minimum power that can be produced by the plant 1 according to the present invention results in an increase in the power available for secondary regulation.

In addition, the overall start-up times for the plant 1 are reduced thanks to the control device 5, 50 according to the present invention.

Indeed, thanks to the present invention, when the high pressure section 13 attains operating conditions, the regulating members 19 and 27 are regulated in such a way that the available thermal energy is used for the achievement of temperature and pressure operating conditions in the intermediate pressure section 14 and the low pressure section 15. In this way the intermediate pressure section 14 and the low pressure section 15 reach operating conditions more quickly than by accelerating the overall start-up times of the plant 1.

Thanks to the present invention, in conditions of low demand for electrical energy by the electricity grid operator, and thus with a requirement to operate the plant at the minimum background technical load, the steam generated by the steam turbine is managed with greater efficiency.

This makes it possible to maintain the delivery of cogeneration services that may be connected to the plant 1 (e.g. low pressure steam production for district heating, intermediate and high pressure steam production for use in refineries).

**Claims**

1. Method for controlling the thermal exchange in a heat recovery steam generator (4) of a combined cycle power plant (1) comprising the steps of:

   - detecting at least one working parameter (QMPcur; Tcur) indicative of the current thermodynamic conditions in at least one first element (25, 40) of the steam generator (4) ;
   - calculating a thermal exchange error (et) as the difference between the detected working parameter (QMPcur; Tcur) and a respective predefined reference value (Qref; Tref);
   - assigning a pressure set point value (SPHP; SPMP) to a regulating member (19; 27) of the heat recovery steam generator (4) on the basis of the thermal exchange error (et) calculated;
   - regulating the regulating member (19; 27) on the basis of the pressure set point value (SPHP; SPMP) assigned;

   **characterised in that** the regulating member (19) is a high pressure regulating valve (19) of the steam generator (4) or an intermediate pressure regulating valve (27) of the steam generator (4).

2. Method according to claim 1, wherein the step of detecting at least one working parameter (Tcur; QHPcur) comprises detecting at least one parameter indicative of one of:

   - the current steam temperature in one conduit of a plurality of high pressure thermal exchange conduits (17);
   - the current steam temperature in one conduit of a plurality of intermediate pressure thermal exchange conduits (25);

- the current steam temperature (Tcur) in one element of the steam generator (4) arranged near a catalyst (40) arranged along the exhaust fumes flow chamber (10) of the steam generator (4);
- the current temperature of a catalyst (40) arranged along the exhaust fumes flow chamber (10) of the steam generator (4) ;
- the current steam flow rate in one conduit of a plurality of high pressure thermal exchange conduits (17);
- the current steam flow rate (QMPcur) in one conduit of a plurality of intermediate pressure thermal exchange conduits (25);
- the current steam pressure in one conduit of a plurality of high pressure thermal exchange conduits (17);
- the current steam pressure in one conduit of a plurality of intermediate pressure thermal exchange conduits (25).

3. Method according to any one of the foregoing claims, wherein the step of assigning a pressure set point value (SPHP; SPMP) comprises adding a correction term (CORR) calculated on the basis of the thermal exchange error (et) to a basis set point value (SPbase).

4. Method according to any one of the foregoing claims, wherein the step of assigning a pressure set point value (SPHP; SPMP) comprises limiting the pressure set point value (SPHP; SPMP) so as to avoid exceeding a predefined maximum value.

5. Combined cycle plant for energy production (1) comprising a steam generator (4) provided with at least one regulating member (19; 27) and with a control device (5) for controlling the thermal exchange in the steam generator (4); the control device (5) comprising:

- at least one detecting device (42; 52) configured to detect at least one working parameter (QMPcur; Tcur) indicative of the current thermodynamic conditions in at least one first element (25; 40) of the steam generator (4);
- at least one error calculating module (43; 53) configured to calculate a thermal exchange error (et) as the difference between the detected working parameter (QMPcur; Tcur) and a respective predefined reference value (Qref; Tref);
- at least one set point calculating module (44; 54) configured to assign a pressure set point value (SPHP; SPMP) to a regulating member (19; 27) of the steam generator (4) on the basis of the thermal exchange error (et) calculated;
- an actuating module (45; 55) configured to regulate the regulating member (19; 27) on the basis of the pressure set point value (SPHP; SPMP) assigned;

**characterised in that** the regulating member (19) is a high pressure regulating valve (19) of the steam generator (4) or an intermediate pressure regulating valve (27) of the steam generator (4).

6. Plant according to claim 5, comprising an exhaust fumes flow chamber (10) and a catalyst (40) arranged along said exhaust fumes flow chamber (10); wherein the detecting device (42; 52) is configured to detect at least one working parameter (Tcur; QHPcur) indicative of one of:

- the current steam temperature in one of the high pressure thermal exchange conduits (17);
- the current steam temperature in one of the intermediate pressure thermal exchange conduits (25);
- the current steam temperature (Tcur) in one element of the steam generator (4) arranged near the catalyst (40) arranged along the exhaust fumes flow chamber (10) of the steam generator (4);
- the current temperature of a catalyst (40) arranged along the exhaust fumes flow chamber (10) of the steam generator (4) ;
- the current steam flow rate in one conduit of a plurality of high pressure thermal exchange conduits (17);
- the current steam flow rate (QMPcur) in one conduit of a plurality of intermediate pressure thermal exchange conduits (25);
- the current steam pressure in one conduit of a plurality of high pressure thermal exchange conduits (17);
- the current steam pressure in one conduit of a plurality of intermediate pressure thermal exchange conduits (25).

7. Plant according to claim 5 or 6, wherein the set point calculating module (44; 54) is configured to calculate the pressure set point value (SPHP; SPMP) as the sum of a basis set point value (SPbase) and a correction term (CORR) calculated on the basis of the thermal exchange error (et).

8. Plant according to claim 7, wherein the set point calculating module (44; 54) comprises a limiter (48) configured to limit the pressure set point value (SPHP; SPMP) so as to avoid exceeding a predefined maximum value.

**Patentansprüche**

1. Verfahren zur Steuerung des Wärmeaustausches in einem Abhitze-Dampferzeuger (4) eines Kombikraftwerkes (1), das die folgenden Schritte umfasst:

   - Erfassen mindestens eines Arbeitsparameters (QMPcur; Tcur), der auf die momentanen thermodynamischen Bedingungen in mindestens einem ersten Element (25, 40) des Dampferzeugers (4) hinweist;
   - Berechnen eines Wärmeaustauschfehlers (et) als die Differenz zwischen dem erfassten Arbeitsparameter (QMPcur; Tcur) und einem jeweiligen vordefinierten Referenzwert (Qref; Tref);
   - Zuordnen eines Drucksollwerts (SPHP; SPMP) zu einem Regelglied (19; 27) des Abhitze-Dampferzeugers (4) auf Grundlage des berechneten Wärmeaustauschfehlers (et);
   - Regeln des Regelglieds (19; 27) auf Grundlage des zugeordneten Drucksollwerts (SPHP; SPMP);

   **dadurch gekennzeichnet, dass**

   das Regelglied (19) ein Hochdruckregelventil (19) des Dampferzeugers (4) oder ein Zwischendruckregelventil (27) des Dampferzeugers (4) ist.

2. Verfahren nach Anspruch 1, wobei der Schritt des Erfassens mindestens eines Arbeitsparameters (Tcur; QHPcur) das Erfassen mindestens eines Parameters umfasst, der auf eine der folgenden Größen hinweist:

   - die momentane Dampftemperatur in einer Leitung einer Vielzahl von Hochdruck-Wärmeaustauschleitungen (17);
   - die momentane Dampftemperatur in einer Leitung einer Vielzahl von Zwischendruck-Wärmeaustauschleitungen (25);
   - die momentane Dampftemperatur (Tcur) in einem Element des Dampferzeugers (4), das in der Nähe eines Katalysators (40) angeordnet ist, der entlang der Abgasströmungskammer (10) des Dampferzeugers (4) angeordnet ist;
   - die momentane Temperatur eines Katalysators (40), der entlang der Abgasströmungskammer (10) des Dampferzeugers (4) angeordnet ist;
   - die momentane Dampfdurchflussrate in einer Leitung einer Vielzahl von Hochdruck-Wärmeaustauschleitungen (17);
   - die momentane Dampfdurchflussrate (QMPcur) in einer Leitung einer Vielzahl von Zwischendruck-Wärmeaustauschleitungen (25);
   - der momentane Dampfdruck in einer Leitung einer Vielzahl von Hochdruck-Wärmeaustauschleitungen (17);
   - der momentane Dampfdruck in einer Leitung einer Vielzahl von Mitteldruck-Wärmeaustauschleitungen (17).

3. Verfahren nach einem der vorstehenden Ansprüche, wobei der Schritt des Zuordnens eines Drucksollwerts (SPHP; SPMP) das Addieren eines Korrekturterms (CORR), der auf Grundlage des Wärmeaustauschfehlers (et) berechnet wird, zu einem Basissollwert (SPbase) umfasst.

4. Verfahren nach einem der vorstehenden Ansprüche, wobei der Schritt der Zuordnung eines Drucksollwerts (SPHP; SPMP) die Begrenzung des Drucksollwerts (SPHP; SPMP) umfasst, um ein Überschreiten eines vordefinierten Maximalwerts zu vermeiden.

5. Kombikraftwerk zur Energieerzeugung (1) mit einem Dampferzeuger (4), der mit mindestens einem Regelglied (19; 27) und mit einer Steuereinrichtung (5) zur Steuerung des Wärmeaustausches im Dampferzeuger (4) versehen ist; wobei die die Steuereinrichtung (5) umfasst:

   - mindestens eine Erfassungsvorrichtung (42; 52), die so konfiguriert ist, dass sie mindestens einen Arbeitsparameter (QMPcur; Tcur) erfasst, der auf die momentanen thermodynamischen Bedingungen in mindestens einem ersten Element (25; 40) des Dampferzeugers (4) hinweist;
   - mindestens ein Fehlerberechnungsmodul (43; 53), das so konfiguriert ist, dass es einen Wärmeaustauschfehler (et) als die Differenz zwischen dem erfassten Arbeitsparameter (QMPcur; Tcur) und einem jeweiligen vordefinierten Referenzwert (Qref; Tref) berechnet;
   - mindestens ein Sollwert-Berechnungsmodul (44; 54), das so konfiguriert ist, dass es einem Regelglied (19; 27) des Dampferzeugers (4) auf Grundlage des berechneten Wärmeaustauschfehlers (et) einen Drucksollwert (SPHP; SPMP) zuordnet;

ein Betätigungsmodul (45; 55), das so konfiguriert ist, dass es das Regelglied (19; 27) auf Grundlage des zugeordneten Drucksollwerts (SPHP; SPMP) regelt;

**dadurch gekennzeichnet, dass**

das Regelglied (19) ein Hochdruckregelventil (19) des Dampferzeugers (4) oder ein Zwischendruckregelventil (27) des Dampferzeugers (4) ist.

6. Anlage nach Anspruch 5, umfassend eine Abgasströmungskammer (10) und einen Katalysator (40), der entlang der Abgasströmungskammer (10) angeordnet ist; wobei die Erfassungsvorrichtung (42; 52) so konfiguriert ist, dass sie mindestens einen Arbeitsparameter (Tcur; QHPcur) erfasst, der auf eine der folgenden Größen hinweist:

- die momentane Dampftemperatur in einer der Hochdruck-Wärmeaustauschleitungen (17);
- die momentane Dampftemperatur in einer der Zwischendruck-Wärmeaustauschleitungen (25);
- die momentane Dampftemperatur (Tcur) in einem Element des Dampferzeugers (4), das in der Nähe des Katalysators (40) angeordnet ist, der entlang der Abgasströmungskammer (10) des Dampferzeugers (4) angeordnet ist;
- die momentane Temperatur eines Katalysators (40), der entlang der Abgasströmungskammer (10) des Dampferzeugers (4) angeordnet ist;
- die momentane Dampfdurchflussrate in einer Leitung einer Vielzahl von Hochdruck-Wärmeaustauschleitungen (17);
- die momentane Dampfdurchflussrate (QMPcur) in einer Leitung einer Vielzahl von Zwischendruck-Wärmeaustauschleitungen (25);
- der momentane Dampfdruck in einer Leitung einer Vielzahl von Hochdruck-Wärmeaustauschleitungen (17);
- der momentane Dampfdruck in einer Leitung einer Vielzahl von Zwischendruck-Wärmeaustauschleitungen (25).

7. Anlage nach Anspruch 5 oder 6, wobei das Sollwert-Berechnungsmodul (44; 54) so konfiguriert ist, dass es den Drucksollwert (SPHP; SPMP) als die Summe eines Basissollwerts (SPbase) und eines Korrekturterms (CORR) berechnet, der auf Grundlage des Wärmeaustauschfehlers (et) berechnet wird.

8. Anlage nach Anspruch 7, wobei das Sollwert-Berechnungsmodul (44; 54) einen Begrenzer (48) umfasst, der so konfiguriert ist, dass er den Drucksollwert (SPHP; SPMP) so begrenzt, dass ein Überschreiten eines vordefinierten Maximalwertes vermieden wird.

## Revendications

1. Procédé destiné à commander l'échange thermique d'un générateur de vapeur à récupération de chaleur (4) d'une centrale électrique à cycle combiné (1) comprenant les étapes suivantes :

- détecter au moins un paramètre de fonctionnement (QMPcur ; Tcur) indicatif des conditions thermodynamiques actuelles dans au moins un premier élément (25, 40) du générateur de vapeur (4) ;
- calculer une erreur d'échange thermique (et) comme étant la différence entre le paramètre de fonctionnement détecté (QMPcur ; Tcur) et une valeur de référence prédéfinie respective (Qref ; Tref) ;
- attribuer une valeur de point de consigne de pression (SPHP ; SPMP) à un élément de régulation (19 ; 27) du générateur de vapeur à récupération de chaleur (4) sur la base de l'erreur d'échange thermique (et) calculée ;
- réguler l'élément de régulation (19 ; 27) sur la base de la valeur de point de consigne de pression (SPHP ; SPMP) attribuée ;

**caractérisé en ce que**

l'élément de régulation (19) est une soupape de régulation à haute pression (19) du générateur de vapeur (4) ou une soupape de régulation à pression intermédiaire (27) du générateur de vapeur (4).

2. Procédé selon la revendication 1, où l'étape consistant à détecter au moins un paramètre de fonctionnement (Tcur ; QHPcur), comprend une étape consistant à détecter au moins un paramètre indicatif de l'une de :

- la température actuelle de la vapeur dans une canalisation d'une pluralité de canalisations d'échange thermique à haute pression (17) ;
- la température actuelle de la vapeur dans une canalisation d'une pluralité de canalisations d'échange thermique à pression intermédiaire (25) ;

- la température actuelle de la vapeur (Tcur) dans un élément du générateur de vapeur (4) agencé à proximité d'un catalyseur (40) agencé le long de la chambre de circulation des gaz d'échappement (10) du générateur de vapeur (4) ;

- la température actuelle d'un catalyseur (40) agencé le long de la chambre de circulation des gaz d'échappement (10) du générateur de vapeur (4);

- le débit actuel de vapeur dans une canalisation d'une pluralité de canalisations d'échange thermique à haute pression (17) ;

- le débit actuel de vapeur (QMPcur) dans une canalisation d'une pluralité de canalisations d'échange thermique à pression intermédiaire (25) ;

- le débit actuel de vapeur dans une canalisation d'une pluralité de canalisations d'échange thermique à haute pression (17) ;

- le débit actuel de vapeur dans une canalisation d'une pluralité de canalisations d'échange thermique à pression intermédiaire (25).

3. Procédé selon l'une quelconque des revendications précédentes, où l'étape consistant à attribuer une valeur de point de consigne de pression (SPHP ; SPMP), comprend une étape consistant à ajouter un terme de correction (CORR) calculé sur la base de l'erreur d'échange thermique (et) à une valeur de point de consigne de base (SPbase).

4. Procédé selon l'une quelconque des revendications précédentes, où l'étape consistant à attribuer une valeur de point de consigne de pression (SPHP ; SPMP), comprend une étape consistant à limiter la valeur de point de consigne de pression (SPHP ; SPMP) afin d'éviter de dépasser une valeur maximum prédéfinie.

5. Centrale électrique à cycle combiné destinée à produire de l'énergie (1), comprenant un générateur de vapeur (4) doté d'un élément de régulation (19 ; 27) au moins, et d'un dispositif de commande (5) destiné à commander l'échange thermique dans le générateur de vapeur (4) ; le dispositif de commande (5) comprenant :

- au moins un dispositif de détection (42 ; 52), configuré pour détecter au moins un paramètre de fonctionnement (QMPcur ; Tcur) indicatif des conditions thermodynamiques actuelles dans au moins un premier élément (25 ; 40) du générateur de vapeur (4) ;

- au moins un module de calcul d'erreur (43 ; 53), configuré pour calculer une erreur d'échange thermique (et) comme étant la différence entre le paramètre de fonctionnement détecté (QMPcur ; Tcur) et une valeur de référence prédéfinie respective (Qref ; Tref) ;

- au moins un module de calcul de point de consigne (44 ; 54), configuré pour attribuer une valeur de point de consigne de pression (SPHP ; SPMP) à un élément de régulation (19 ; 27) du générateur de vapeur (4) sur la base de l'erreur d'échange thermique (et) calculée ;

- un module d'actionnement (45 ; 55), configuré pour réguler l'élément de régulation (19 ; 27) sur la base de la valeur de point de consigne de pression (SPHP ; SPMP) attribuée ;

**caractérisé en ce que**
l'élément de régulation (19) est une soupape de régulation à haute pression (19) du générateur de vapeur (4) ou une soupape de régulation à pression intermédiaire (27) du générateur de vapeur (4).

6. Centrale électrique selon la revendication 5, comprenant une chambre de circulation des gaz d'échappement (10) et un catalyseur (40) agencé le long de ladite chambre de circulation des gaz d'échappement (10) ; où le dispositif de détection (42 ; 52) est configuré pour détecter au moins un paramètre de fonctionnement (Tcur ; QHPcur) indicatif de l'une de :

- la température actuelle de la vapeur dans l'une des canalisations d'échange thermique à haute pression (17) ;

- la température actuelle de la vapeur dans l'une des canalisations d'échange thermique à pression intermédiaire (25) ;

- la température actuelle de la vapeur (Tcur) dans un élément du générateur de vapeur (4) agencé à proximité du catalyseur (40) agencé le long de la chambre de circulation des gaz d'échappement (10) du générateur de vapeur (4) ;

- la température actuelle d'un catalyseur (40) agencé le long de la chambre de circulation des gaz d'échappement (10) du générateur de vapeur (4);

- le débit de vapeur dans une canalisation d'une pluralité de canalisations d'échange thermique à haute pression (17) ;

- le débit actuel de vapeur (QMPcur) dans une canalisation d'une pluralité de canalisations d'échange thermique à pression intermédiaire (25) ;
- le débit actuel de vapeur dans une canalisation d'une pluralité de canalisations d'échange thermique à haute pression (17) ;
- le débit actuel de vapeur dans une canalisation d'une pluralité de canalisations d'échange thermique à pression intermédiaire (25).

7. Centrale électrique selon la revendication 5 ou 6, où le module de calcul de point de consigne (44 ; 54) est configuré pour calculer la valeur de point de consigne de pression (SPHP ; SPMP) comme étant la somme d'une valeur de point de consigne de base (SPbase), et d'un terme de correction (CORR) calculé sur la base de l'erreur d'échange thermique (et).

8. Centrale électrique selon la revendication 7, où le module de calcul de point de consigne (44 ; 54) comprend un dispositif de limitation (48) configuré pour limiter la valeur de point de consigne de pression (SPHP ; SPMP) afin d'éviter de dépasser une valeur maximum prédéfinie.

FIG. 1

FIG. 2

# FIG. 3

EP 3 187 702 B1

EP 3 187 702 B1

# FIG. 4

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150020499 A
- EP 2098691 A1
- EP 2372127 A1